# EUROPÄISCHE PATENTSCHRIFT

(11) **EP 0 933 849 B1**
(45) Veröffentlichungstag und Bekanntmachung des Hinweises auf die Patenterteilung: **05.10.2005**
(21) Anmeldenummer: 99101268.3
(22) Anmeldetag: 23.01.1999
(51) Int. Cl.: H02B 1/056, H01R 9/26

(54) **Einrichtung zur Stromversorgung**
Power supply device
Dispositif d'alimentation électrique

(30) Priorität: 29.01.1998 DE 19804833; 14.02.1998 DE 19806081
(43) Veröffentlichungstag der Anmeldung: 04.08.1999
(73) Patentinhaber: Ellenberger & Poensgen GmbH, D-90518 Altdorf (DE)
(72) Erfinder: Beyer, Lothar, 92318 Neumarkt (DE)
(74) Vertreter: Tergau & Pohl Patentanwälte

(56) Entgegenhaltungen:
- US-A- 2 902 631

## Beschreibung

Die Erfindung betrifft eine Einrichtung zur Stromversorgung insbesondere in der Telekommunikationstechnik. Eine solche Einrichtung ist bekannt aus EP 252 512 A1.

Bei solchen Einrichtungen verwendete Steckermodule entsprechen hinsichtlich ihres grundsätzlichen Aufbaus einem in DE 40 40 602 C2 offenbarten Ausführungsbeispiel. Der dortige Steckermodul ist mit vier parallelgeschalteteten Stromabgängen ausgestattet, die durch vier aneinandergereihte, auf die Deckelaußenseite des Steckermoduls aufgesteckte Schutzschalter abgesichert sind. Die Schutzschalter sind mit ihren Breitseiten aneinandergereiht auf eine Sockelleiste aufgesteckt. Sie zeichnen sich durch eine schmale Bauweise aus.

Aus einem Katalog der Firma Phoenix Contact Gmbh Blomberg, Ausgabe 93/94 betreffend "Innovation in Interface I Verbindungstechnik", S. 68 und 69 ist eine Anordnung mit starren parallelen Stromschienen bekannt, bei welcher auf jede Stromschiene jeweils in Aneinanderreihung Anschlußklemmen aufgeschoben sind. Diese Anschlußklemmen sind indessen keine Steckermodule im Sinne des Anspruches 1.

Schließlich ist aus US 2 902 631 A eine Einrichtung zur Stromversorgung einzelner Verbraucher bekannt. Die einem jeden Verbraucher zugeordneten Versorgungsleitungen sind in jeweils einem Anschlußblock zusammengefasst, in welchem der Versorgungsweg durch eine Stecksicherung abgesichert ist. Die Anschlußblöcke sind auf jeweils einer Stromschiene auch mittels Stecksicherungen schraubfixiert. Bei dieser bekannten Einrichtung sind zwei parallel nebeneinander innerhalb eines Gehäuses fixierte Stromschienen vorhanden. Die Stromschienen sind dabei beidendig mit elektrischen Baueinheiten kontaktiert verbunden.

Bei Einrichtungen zur Stromversorgung in der Telekommunikationstechnik besteht ein besonderes Problem darin, dass die Anzahl der benötigten Leitungsabgänge in erheblichem Umfang variiert. Der Erfindung liegt daher die Aufgabe zugrunde, eine Stromversorgungseinrichtung für parallel geschaltete elektrische Verbraucher mittels nebeneinander liegender Potentialleitungen zu schaffen, die in einfacher und kostengünstiger Weise einer unterschiedlichen Anzahl von Stromversorgungsabgängen anpassbar ist.

Diese Aufgabe wird durch Anspruch 1 gelöst. Die Stromschienen für die Potentialleitungen stehen dabei wie mit nur ihrem einen Ende gehäuseseitig eingespannte Spieße aus einer Seite des Anschlußgehäuses heraus. Die Länge der Stromschienen ist problemlos auf die benötigte Anzahl von Steckermodulen begrenzbar. Die Steckermodule werden in der benötigten Anzahl aufgeschoben und in Anlage an das Anschlußgehäuse und/oder aneinandergeschoben wie Fleischstücke auf einen Bratspieß. Ausschließlich durch den Reibschluss vom Aufschieben der Steckermodule ohne ein Schraubfixierteil erfolgen die Fixierung der Anschlussblöcke und die Kontaktierung mit den Stromschienen.

Je nach Anzahl der gewünschten Steckermodule werden auf lediglich unterschiedliche Länge geschnittene Stromschienen benötigt. Das sind die einzigen in Abhängigkeit der Anzahl der zur Verfügung zu stellenden Stromversorgungsanschlüsse zu variierenden Bauteile der erfindungsgemäßen Einrichtung. Diese Variation läßt sich in einfacher Weise bewerkstellilgen.

Gemäß Anspruch 4 ist es bei der Verwendung von Stromschienen mit unterschiedlichen Querschnittsdimensionen z.B. mit solchen rechteckiger Querschittsform vorteilhaft, die Stromschienen mit der längeren Seite, dem längeren Durchmesser oder der längeren Dimension ihres Querschnittes etwa lotrecht zum Boden des Anschlussgehäuses auszurichten.

Die Übertragung von zusätzlich zum Potentialstrom vorhandenem Signalstrom, Hilfsstrom oder eines Massepotentials vom Anschlußgehäuse auf die Steckermodule kann zweckmäßig durch eine herkömmliche Steckkontaktierung nach Anspruch 18 vorgenommen werden .

Die Erfindung wird anhand von in den Figuren dargestellten Ausführungsbeispielen näher erläutert. Es zeigen:
- Fig. 1: in perspektivischer Draufsicht eine erfindungsgemäße Einrichtung mit einem Anschlußgehäuse, einem daran anliegenden Steckermodul und einem weiteren Steckermodul, der bereits auf die Stromschienen aufgefädelt, jedoch noch nicht in Anlage an den bereits in seiner Endstellung befindlichen ersten Steckermodul geschoben ist.
- Fig. 2: eine perspektivische Draufsicht auf das Unterteil des Anschlußgehäuses und eines an das Anschlußgehäuse angereihten Steckermoduls bei jeweils abgenommenen Gehäusedeckeln.
- Fig. 3: eine perspektivische Draufsicht auf das nackte Gehäuseunterteil des Anschlußgehäuses ohne einliegende spannungsführende Elemente.
- Fig. 4: eine perspektivische Draufsicht analog Fig. 3 auf das nackte Unterteil eines Steckermoduls.
- Fig. 5: in perspektivischer Explosionsdarstellung und Zuordnung zu den Gehäuseunterteilen gemäß Fig. 3 und Fig. 4 die beiden Stromschienen und die mit ihnen zusammenwirkenden Kontaktierungselemente für die Einspeisung des Potentialstromes und für die Kontaktierung der Stekkermodule.
- Fig. 6: in Explosionsdarstellung und entsprechender Zuordnung zu den Fig. 3-5 Stromführungs- und Kontaktierungselemente für die zusätzliche Übertragung eines Signalstroms, eines Hilfsstroms, des Massepotentials o.dgl. vom Anschlußgehäuse zu den nicht dargestellten Schutzschaltern.
- Fig. 7 und 8: alternative Ausführungsformen von in den Durchgängen der Steckermodule einliegenden, die Stromschienen kontaktierenden Kontaktelementen.

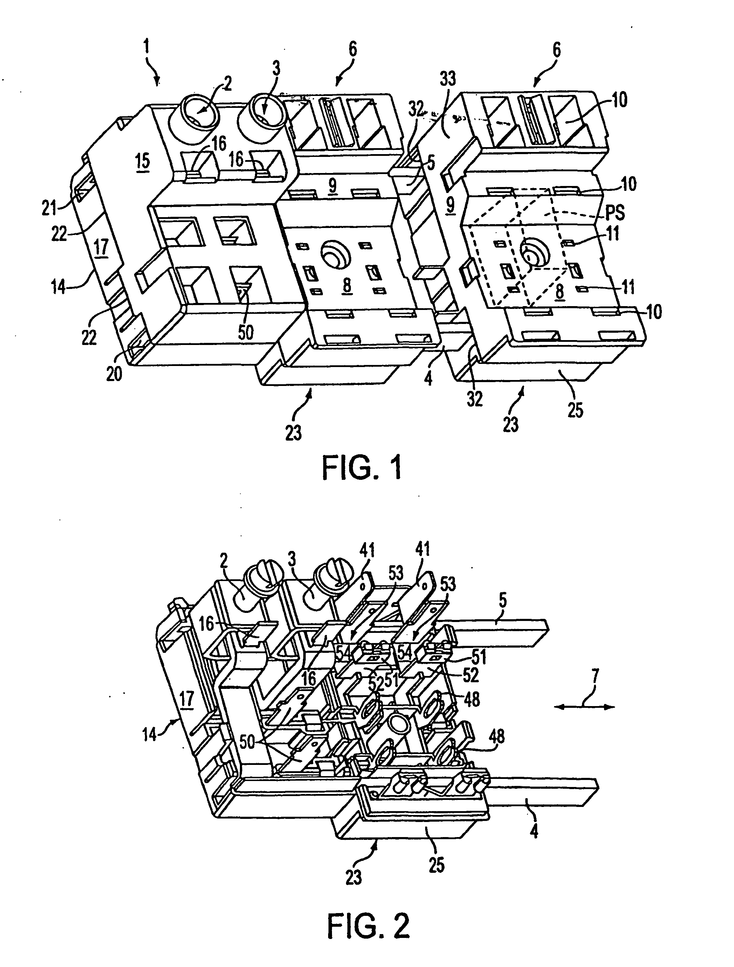

Das Basiselement der erfindungsgemäßen Einrichtung ist das Anschlußgehäuse 1. Es enthält die Anschlüsse 2,3 zunächst für das Betriebspotential und deren Leitungsverbindung zu den im Anschlußgehäuse 1 untergebrachten Stromschienen 4,5, die aus der rechten Seite (Fig. 1-3) des Anschlußgehäuses 1 in Richtung 7 der Aneinanderreihung der Steckermodule 6 hinausstehen. Die Richtung 7 der Aneinanderreihung der Steckermodule 6 an das Anschlußgehäuse 1 verläuft parallel zur Längsrichtung der Stromschienen 4,5 insbesondere in deren außerhalb des Anschlußgehäuses 1 liegenden Steckbereich.

Die Oberfläche 8 des Gehäusedeckels 9 eines Modulgehäuses der Steckermodule 6 enthält eine beim Ausführungsbeispiel im Querschnitt trapezförmige Ausmuldung zur Aufnahme von beispielsweise Schutzschaltern, die einzeln einen jeden Verbraucheranschluß absichern. Sie sind in Richtung 7 aneinandergereiht und die Art ihrer Positionierung auf den Steckermodulen 6 entspricht der strichpunktiert in der Fig. von DE 44 40 602 C2 gezeigten Positionierung eines solchen üblichen Schutzschalters (dort. Pos. 5). Zur Aufnahme der aus dem Boden z.B. eines solchen handelsüblichen Schutzschalters nach unten hinausstehenden Kontaktzungen und für deren Kontaktierung mit entsprechenden Gegenkontakten enthält der Deckel 9 eines Steckermoduls 6 an seiner Oberfläche eine unterschiedliche Anzahl von durchgehenden Stecköffnungen 10,11. Dabei dienen die Stecköffnungen 10 zur Kontaktierung des Betriebspotentials der Stromschienen 4,5 und die Stecköffnungen 11 zur Kontaktierung eines Signalstroms, eines Hilfsstroms, eines Massekontaktes o.dgl.

Die mit den Anschlüssen 2,3 des Anschlußgehäuses 1 verbundenen Anschlußstücke 12,13 der Stromschienen 4,5 sind im wesentlichen im schalenförmigen Unterteil 14 des Anschlußgehäuses 1 untergebracht. Sie weisen an der Deckfläche ihres Eingangsbereiches nach oben abstehende Flachstecker 16 auf, die aus dem Deckel 15 des Anschlußgehäuses 1 hindurchragen und von außen durch nicht dargestellte Steckaufnahmen kontaktierbar sind.

An ihrem im Gehäuseunterteil 14 liegenden Ende sind die Stromschienen 4,5 an die Anschlußstücke 12,13 angeschweißt. Daher liegen die Stromschienen 4 mit rechteckiger Querschnittsform aufrechtstehend in einem Höhenniveau des Unterteils 14 des Anschlußgehäuses 1 befindlichen Bereich. Die Stromschienen 4,5 stehen also nicht über die Trennfuge zwischen Unterteil 14 und Deckel 15 des Anschlußgehäuses 1 nach oben hinaus. Die Stromschienen 5 sind also hochkant in dem Unterteil 14 des Anschlußgehäuses 1 fixierte Teile. Es sind Standardteile von über ihre gesamte Länge etwa gleichbleibender Querschnittsform, die jedenfalls ein kontaktierendes Aufschieben der Steckermodule 6 auf die Stromschienen 4,45 nicht behindert.

Das Gehäuseunterteil 14 des Anschlußgehäuses 1 enthält Seitenwände 17 mit etwa lotrecht zu dem Gehäuseboden 18 ausgerichteten und von der Oberkante 19 der Seitenwände 17 ausgehenden Durchtrittsschlitzen 20,21 für die Stromschienen 4,5. Es sind also in beiden Seitenwänden 17 von deren Oberkante 19 nach unten reichende Durchtrittsschlitze 20,21 vorhanden, so daß die Stromschienen 4,5 entgegen dem in den Figuren darstellten Ausführungsbeispiel von den Anschlußstücken 12,13 nicht zwingend (nur) nach rechts, sondern auch nach links zur Eröffnung einer anderen Seite der Anreihmöglichkeit aus dem Anschlußgehäuse 1 hinausstehen können. Jedenfalls ist die Gestaltung so getroffen, daß die Länge bzw. Höhe der Durchtrittsschlitze 20,21 etwa dem Ausmaß der längeren Rechteckseite des Querschnittes der Stromschienen 4,5 entspricht. Die definitive Lagefixierung der Stromschienen 4,5 im zugeordneten Durchtrittsschlitz 20,21 erfolgt also durch den Deckel 15, der mit der Unterkante 22 seiner Seitenwände die Durchtrittsschlitze 21,22 verschließt. Er stellt dadurch die Lagepositionierung der Stromschienen 4,5 und damit auch ihrer Anschlußstücke 12,13 innerhalb des Unterteils 14 des Anschlußgehäuses 1 sicher. Die Durchtrittsschlitze 20,21 sind entsprechend der Querschnittsform der Stromschienen 4,5 dimensioniert, so daß ihre Kanten ebenfalls zur Lagepositionierung beitragen.

Die Stromschienen 4,5 sind entsprechend der Anzahl der an das Anschlußgehäuse 1 anzureihenden Steckermodule 6 von unterschiedlicher Länge. Sie stehen aus der rechten Seitenwand 17 des Unterteils 14 des Anschlußgehäuses 1 wie zwei zueinander parallele und rechtwinklig zu den Seitenwänden 17 ausgerichtete Spieße hinaus.

Das Gehäuse der Steckermodule 6 enthält ein durch den Deckel 9 verschließbares, schalenförmiges Unterteil 23. Es ist im wesentlichen ähnlich dem Unterteil 14 des Anschlußgehäuses 1 ausgestaltet. Besonders wesentlich sind die beiden von den Seitenwänden 24 und den Stirnwänden 25 sowie von inneren Wandelementen 26 und dem Boden 27 des Unterteils 23 abgegrenzten Durchgänge 28,29 für die Stromschienen 4,5. Die Durchgänge 28,29 sind von den beiden Seitenwänden 24 her über die Durchtrittsschlitze 30,31 zugänglich. Diese Schlitze 30,31 im Modulunterteil 23 entsprechenden Durchtrittsschlitzen 20,21 des Unterteiles 14 des Anschlußgehäuses 1. Sie dienen nämlich zur Einführung bzw. zur Durchleitung der Stromschienen 4,5 und sind dementsprechend dimensioniert wie die Durchtrittsschlitze 20,21 des Unterteils 14 des Anschlußgehäuses 1.

Auch der Deckel 9 des Steckermoduls 6 ist in der Wirksamkeit der Unterkanten 32 seiner Seitenwände 33 auf die Stromschienen 4,5 im Bereich der Durchgänge 28,29 durch das Gehäuseunterteil 23 eines Steckermoduls 6 genauso lagepositionierend wirksam wie die Unterkanten 22 der Seitenwände des Deckels 15 des Anschlußgehäuses 1 in deren Bereich.

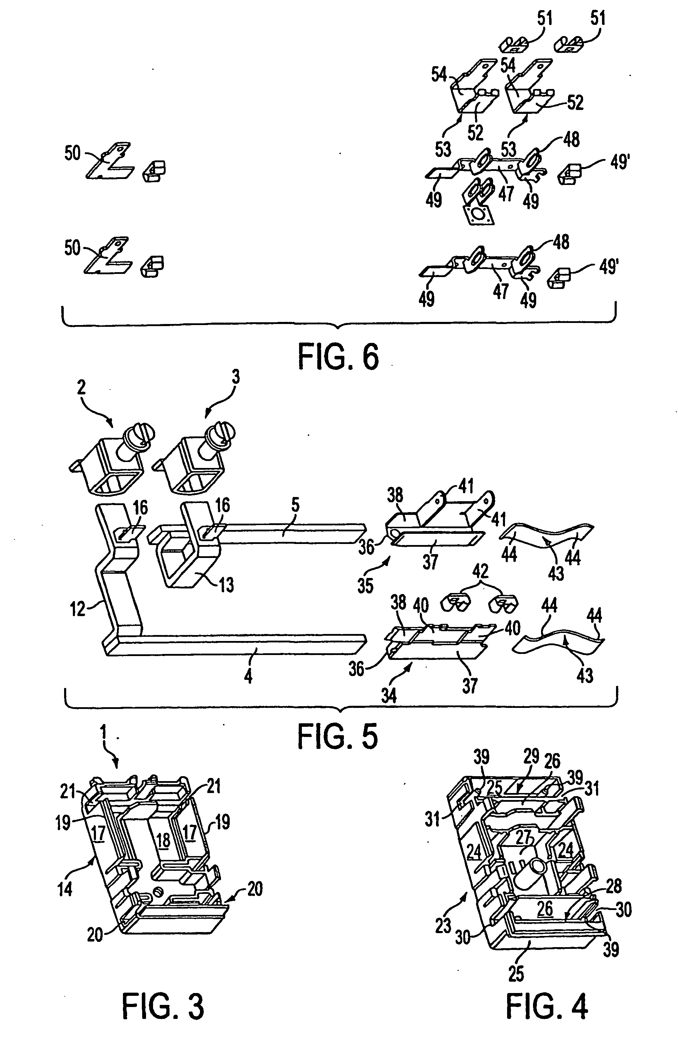

In den Durchgängen 28,29 eines Steckermoduls 6 liegen im Querschnitt etwa U-förmige Gegenkontakte 34,35 ein. Sie liegen mit dem U-Scheitel 36 auf dem Boden 27 der Durchgänge 28,29 auf. Ihre U-Schenkel 37,38 liegen an den Stimwänden 25 bzw. den Wandelementen 26 des Unterteiles 23 an. Die Gegenkontakte 34,35 sind von einer solchen Länge - bezogen auf die Längsrichtung 7 der Stromschienen 4,5 -, daß sie schon aufgrund ihrer Dimensionen lagepositioniert innerhalb der Durchgänge 28,29 des Unterteils 23 einliegen. Ihr U-Scheitel enthält aus Fig. 5 erkennbare Durchtrittsöffnungen nach Art von Stanzlöchern, mit denen sie auf aus dem Boden 27 des Unterteils 23 nach Art von Säulen hochstehende Fixiervorsprünge 39 auffädelbar und dadurch zusätzlich lagepositionierbar sind.

An einen der U-Schenkel 37,38 der Gegenkontakte 34,35 sind in Richtung auf den Deckel 9 abstehende Kontaktzungen 40,41 angeformt, die in Montagestellung in den Stecköffnungen 10 des Deckels 9 von außen zugänglich einliegen und dadurch von außen durch die Steckaufnahmen 42 elektrischer Leitungen zugänglich sind.

Die Gegenkontakte 34,35 und ihre Kontaktzungen 40,41 sind aus einem einstükkigen, in seine Endform gebogenen Blechstanzteil gebildet. Das Blechstanzteil kann aus nicht selbst federndem, kontaktierendem Metall, z.B. aus einer Kupferlegierung hergestellt sein. In einem solchen Falle ist in den Zwischenraum zwischen den beiden U-Schenkeln 37,38 eine in Längsrichtung 7 wellenförmige, konvex gebogene Blattfeder 43 vorhanden, deren konvexe Auswölbung gegen die Innenseite eines U-Schenkels 37,38 wirksam ist und zur Erhöhung des Kontaktdruckes, also zur Sicherstellung eines ausreichenden Kontaktes zwischen den Gegenkontakten 34,35 und den zugehörigen Stromschienen 4,5 dient. Die Lagepositionierung der lose im Zwischenraum zwischen den U-Schenkeln 37,38 von oben hereinliegenden Blattfeder 43 wird durch die Fixiervorsprünge 39 bewerkstelligt. Sie stehen lagepositionierend in die Konkavbereiche 44 der Blattfedern 43 hinein und wirken dadurch ohne Beeinträchtigung der kontaktierenden Federbeweglichkeit einer Verschiebung der Blattfedern 43 in Längsrichtung 7 innerhalb der Gegenkontakte 34,35 entgegen.

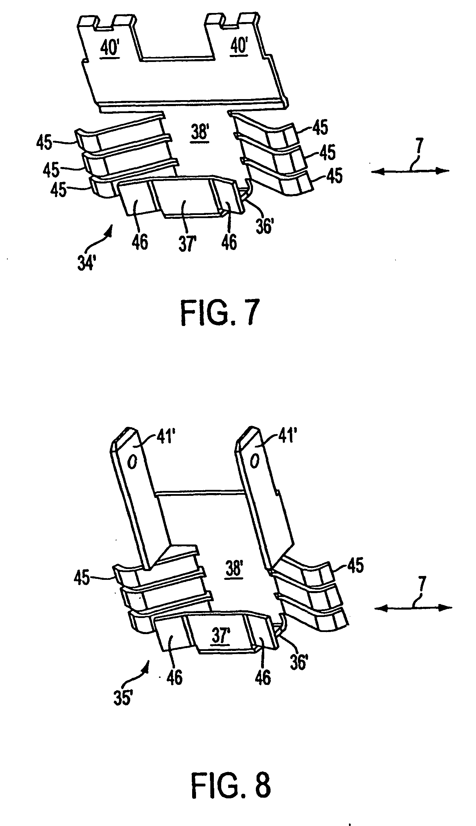

Während im Falle der in Fig. 5 dargestellten Anwendung einer zusätzlichen Blattfeder 43 die Gegenkontakte 34,35 zweiteilig sind, ist auch eine einteilige Ausbildung möglich, wie sie anhand von Fig. 7 und 8 beschrieben wird. Auch die Gegenkontakte 34',35' weisen grundsätzlich eine U-Form wie die Gegenkontakte 34,35 auf. Es sind daher dieselben Bezugszeichen wie im Falle von Fig. 5 verwendet nur mit dem Unterschied, daß sie mit einem Indexbindestrich versehen sind. Der U-Schenkel 38' der Gegenkontakte 34',35' ist an beiden in Längsrichtung 7, also in Durchgangsrichtung der Stromschienen 4,5 liegenden Seiten zur Bildung einer Kontaktdruckfahne 45 in Richtung auf den anderen U-Schenkel 37' abgebogen (Fig. 7,8). In diesem Falle besteht zweckmäßig das Blechstanzteil des Gegenkontaktes 34',35' aus einem wenigstens geringfügig federelastischen Kontaktwerkstoff. Der andere U-Schenkel 37' ist an seinen beiden Seiten mit einer entsprechend abgebogenen Druckfahne 46 versehen, die hier aber mehr die Wirkung einer Leitschräge beim spießartigen Einführen der Stromschienen 4,5 bzw. beim Auffädeln der Steckermodule 6 auf die Stromschienen haben.

Außer den Stromschienen 4,5 für die Betirebspotentialleitungen, enthalten die Steckermodule 6 noch in Fig. 6, rechte Seite, explosionsartig dargestellte Leitungs- bzw. Verbindungselemente für die Leitung eines Signalstroms, eines Hilfsstroms, eines Massepotentials o. dgl., kurz eines "Hilfsstrompotential". In entsprechenden Ausnehmungen des Gehäuseunterteils 23 des Steckermoduls 6 liegen Verbindungsschienen 47 ein (Fig. 6). Sie verlaufen parallel zwischen den Stromschienen 4,5 bzw. den Durchgängen 28,29. Sie sind zur Oberfläche 8 des Deckels 9, d.h. zur Aufsteckseite beispielsweise eines Schutzschalters hin analog den Steckverbindungselementen 40,41 für den Potentialstrom mit Steckzungen 48 versehen, die in Montagestellung des Steckermoduls 6 innerhalb der Stecköffnungen 11 des Deckels 9 einlegen ähnlich den Kontaktzungen 40,41 der Gegenkontakte 34,35 in den Stecköffnungen 10. An ihren in Längsrichtung 7 weisenden Enden enthalten die Verbindungsschienen 47 Steckverbindungskontakte 49, die beim Aufschieben eines Steckermoduls 6 auf die Stromschienen 4,5 und bei einem Ansetzen an das Anschlußgehäuse 1 über Steckaufnahmen 49' eine Steckkontaktierung zum Anschlußgehäuse 1 sicherstellen. Die Verbindungsschienen 47 und ihre Steckzungen 48 kontaktieren also über die Steckverbindungskontakte 49 entsprechende, als Flachstecker 50 ausgebildete Steckelemente des Anschlußgehäuses 1.

In Fig. 6 rechts oben sind zwei Steckaufnahmen 51 dargestellt, die den Steckaufnahmen 42 (Fig. 5) entsprechen. Die Steckaufnahmen 51 wirken zusammen mit den Kontaktzungen 52 von Gegenkontakten 53. Die Gegenkontakte 53 befinden sich unterhalb jeweils einer Stecköffnung 10 in Fig. 2 und sind der Geräteabgang. Es erfolgt also über eine Stecköffnung 10, wie sie in Fig. 1, unten dargestellt ist, die gemeinsame Einspeisung über die Sammelschiene 4 und über die Stecköffnung 10 oben in Fig. 1 erfolgt dann die Aufteilung des Stromes auf die einzelnen Stromkreise. Mit 54 ist der U-Scheitel eines Gegenkontaktes 53 gekennzeichnet. Die Anordnung der Gegenkontakte 53 innerhalb des Gehäuseunterteils 23 ist in Fig. 2 rechts oben deutlich erkennbar. Die Gegenkontakte 53 sind direkt vor der Sammelschiene 5 angeordnet, die eine gemeinsame Masseverbindung darstellt. Der Anschluß des Verbrauchers erfolgt zwischen den beiden oben um 90° versetzt angeordneten Flachsteckern mit den Kontaktzungen 41.

Die erfindungsgemäße Einrichtung ist also modular aufgebaut. Sie wird aber komplett montiert vom Hersteller mit der georderten Anzahl von Steckermodulen 6 geliefert, die im Falle des Ausführungsbeispiels für jeweils zwei Leitungsanschlüsse und dementsprechend zur Aufnahme von zwei Schutzschaltern auf der Oberfläche 8 ihres Deckels 9 eingerichtet sind. Entsprechend der Anzahl der Steckermodule 6 werden die Stromschienen 5 auf Länge geschnitten und mit den Anschlußstücken 12,13 verschweißt. Die in Betracht kommende Anzahl von Stekkermodulen 6 wird auf die Stromschienen 4,5 in Längsrichtung 7 aufgeschoben bzw. aufgesteckt. In der Steckendstellung liegen die Module 6 fest aneinander bzw. am Anschlußgehäuse 1 an. Die Gegenkontakte 34,35 bzw. 34',35' sind so ausgestaltet, daß sie ein Durchschieben der Stromschienen 4,5 durch die Durchgänge 28,29 der Steckermodule 6 nicht behindern und trotzdem sowohl eine sichere Kontaktierung als auch eine sichere Lagepositionierung in Form einer Reibschlußverbindung gewährleisten. Für die Gewährleistung einer unbehinderten Durchschiebbarkeit dienen z.B. bei der Ausführung der Gegenkontakte 34',35' nach Fig. 7 und 8 die als Leitflächen wirksamen Druckfahnen 46 der U-Schenkel 37'.

Die Steckermodule 6 sind so konzipiert, daß sie sowohl von der linken als auch von der rechten Seite an ein Anschlußgehäuse 1 ansetzbar sind. Die Gegenkontakte 34,34' und 35,35' sind so ausgebildet, daß sie sowohl zur Gegenkontaktierung einer Stromschiene 4 als auch einer Stromschiene 5 geeignet sind. Dementsprechend ist auch die Ausbildung des Gehäuses der Steckermodule 6 weitgehend symmetrisch, um möglichst wenige Einzelteile zu benötigen. Die konstruktive Ausgestaltung der Gegenkontakte 34,34' bzw. 35,35' ist so getroffen, daß sie eine dauerhafte niederohmige elektrische Verbindung ermöglicht, die eine Belastung bis etwa 30A ohne unzulässige Erwärmung bei den realisierten Abmessungen zuläßt. Die elektrische Verbindung der Anschlüsse 2,3 der Stromschienen 4,5 wird über Mantelklemmen hergestellt (Fig. 5).

### Bezugszeichenliste

- 1: Anschlußgehäuse
- 2: Anschluß
- 3: Anschluß
- 4: Stromschiene
- 5: Stromschiene
- 6: Steckermodul
- 7: Aneinanderreihrichtung
- 8: Oberfläche
- 9: Deckel
- 10: Stecköffnung
- 11: Stecköffnung
- 12: Anschlußstück
- 13: Anschlußstück
- 14: (Gehäuse)unterteil
- 15: Deckel
- 16: Flachstecker
- 17: Seitenwand
- 18: Boden (Gehäuse-)
- 19: Oberkante
- 20: Durchtrittsschlitz
- 21: Durchtrittsschlitz
- 22: Unterkante
- 23: (Geh-)Unterteil
- 24: Seitenwand
- 25: Stirnwand
- 26: Wandelement
- 27: Boden
- 28: Durchgang
- 29: Durchgang
- 30: Durchtrittsschlitz
- 31: Durchtrittsschlitz
- 32: Unterkante
- 33: Seitenwand
- 34,34': Gegenkontakt
- 35,35': Gegenkontakt
- 36,36': U-Scheitel
- 37,37': U-Schenkel
- 38,38': U-Schenkel
- 39: Fixiervorsprung
- 40: Kontaktzunge
- 41: Kontaktzunge
- 42: Steckaufnahme
- 43: Blattfeder
- 44: Konkavbereich
- 45: Druckfahne
- 46: Druckfahne
- 47: Verbindungsschiene
- 48: Steckzunge
- 49: Steckverbindungsschiene
- 48: Steckzunge
- 49: Steckverbindungskontakte
- 49': Steckaufnahme
- 50: Flachstecker
- 51: Steckaufnahme
- 52: Kontaktzunge
- 53: Gegenkontakt
- 54: U-Scheitel

## Patentansprüche

1. Einrichtung zur insbesondere in der Telekommunikationstechnik einsetzbaren Stromversorgung parallel geschalteter elektrischer Verbraucher mittels nebeneinanderliegender Potentialleitungen, die als starre, parallele Stromschienen (4,5) ausgebildet sind,
**gekennzeichnet durch**
- ein die Anschlüsse (2,3) für die Zuführung des Betriebspotentials enthaltendes Anschlussgehäuse (1), an das Steckermodule (6) zum Anschluss einzelner Verbraucher angesetzt sind,
- wobei für die Stromschienen (4,5) im Steckermodul (6) dessen Steckermodulgehäuse durchsetzende Durchgänge (28,29) sowie Gegenkontakte (34,34',35,35') vorgesehen sind,
- wobei die Stromschienen (4,5) aus einer Seitenwand des Anschlussgehäuses (1) hinausstehen, auf welche die Steckermodule (6) von den freien Enden her aufgeschoben und in Anlage an das Anschlussgehäuse (1) und/oder aneinander geschoben sind, und wobei die Durchgänge (28,29) und die Gegenkontakte (34,35,34',35') derart ausgestaltet sind, dass diese sowohl eine Kontaktierung als auch eine Lagepositionierung in Form einer Reibschlussverbindung gewährleisten

2. Einrichtung nach Anspruch 1,
**dadurch gekennzeichnet,**
**daß** die Stromschienen (4,5) über Ihre gesamte, auch aus dem Anschlußgehäuse (1) hinausstehende Länge eine gleichbleibende Querschnittsform aufweisen.

3. Einrichtung nach Anspruch 1 oder 2,
**dadurch gekennzeichnet,**
**daß** die Stromschienen (4,5) einen rechteckigen Querschnitt aufweisen und etwa rechtwinklig zur Steckrichtung der Stecköffnungen (10,11) für die Verbraucheranschlüsse der Steckermodule (6) ausgerichtet sind.

4. Einrichtung nach einem oder mehreren der vorhergehenden Ansprüche,
**dadurch gekennzeichnet,**
**daß** die Stromschienen (4,5) mit der längeren Seite, dem längeren Durchmesser oder der längeren Dimension ihres Querschnittes etwa lotrecht zum Boden des Anschlußgehäuses (1) ausgerichtet sind.

5. Einrichtung nach einem oder mehreren der vorhergehenden Ansprüche,
**dadurch gekennzeichnet,**
- **daß** das Gehäuse eines Steckermoduls (6) ein schalenförmiges Unterteil (23) und einen Deckel (9) enthält,
- **daß** die Teilfuge bzw. Teilfugen zwischen den Öffnungskanten (32) von Unterteil (23) und Deckel (9) etwa rechtwinklig zur Erstreckungsebene der Stromschienen (4,5) verläuft bzw. verlaufen und
- **daß** die Begrenzungskanten der das Modulgehäuse durchsetzenden Durchgänge (28,29) von Öffnungskanten (32) sowohl des Unterteils (23) als auch des Deckels (9) begrenzt sind.

6. Einrichtung nach Anspruch 5,
**dadurch gekennzeichnet,**
**daß** die Stromschienen (4,5) lagepositioniert an Begrenzungskanten und/oder Begrenzungswänden der das Modulgehäuse (6) durchsetzenden Durchgänge (28,29) anliegen.

7. Einrichtung nach einem oder mehreren der vorhergehenden Ansprüche,
**dadurch gekennzeichnet,**
**daß** die Stromschienen (4,5) in schlitzartigen, von der Öffnungskante des Unterteils (23) ausgehenden und zu dessen Boden (27) hin ausgerichteten Schlitzen (30,31) des Unterteils (23) lagepositioniert einliegen.

8. Einrichtung nach einem oder mehreren der vorhergehenden Ansprüche,
**dadurch gekennzeichnet,**
**daß** der Deckel (9) eines Modulgehäuses (6) in Montagestellung mindestens eine Stromschiene (4,5) in ihrer Schlitzeinlage am Unterteil (23) lagefixierend beaufschlagt.

9. Einrichtung nach einem oder mehreren der vorhergehenden Ansprüche,
**dadurch gekennzeichnet,**
**daß** in den Durchgängen (28,29) der Stromschienen (4,5) durch das Unterteil (23) eines Modulgehäuses (6) im Querschnitt etwa U-förmige Gegenkontakte (34,35) einliegen, zwischen deren U-Schenkeln (37,38) die Stromschienen (4,5) nach Art von Messerkontakten ruhen.

10. Einrichtung nach einem oder mehreren der vorhergehenden Ansprüche,
**dadurch gekennzeichnet,**
**daß** der Deckel (9) von Stecköffnungen (10,11) für Steckkontaktierungen durchsetzt ist.

11. Einrichtung nach Anspruch 9 oder 10,
**dadurch gekennzeichnet,**
**daß** an einen der U-Schenkel (37,38) in Richtung auf den Deckel (9) abstehende Kontaktzungen (40,41) für eine den Deckel (9) durchsetzende Steckverbindung (40-42) angeformt sind.

12. Einrichtung nach einem der Ansprüche 9 bis 11,
**dadurch gekennzeichnet,**
**daß** die Gegenkontakte (34,35) und die Kontaktzungen (40,41) aus einem einstückigen, in seine Endform gebogenen Blechstanzteil, insbesondere einem solchen aus einem Federwerkstoff gebildet sind.

13. Einrichtung nach einem der Ansprüche 9 bis 12,
**dadurch gekennzeichnet,**
**daß** sich die Gegenkontakte (34,35) im wesentlichen über die gesamte Durchgangslänge des Unterteiles (23) eines Modulgehäuses (6) erstrecken.

14. Einrichtung nach Anspruch 13,
**dadurch gekennzeichnet,**
**daß** mindestens ein U-Schenkel (38') der Gegenkontakte (34',35') an mindestens einer in Durchgangsrichtung (7) liegenden Seite zur Bildung einer Kontaktdruckfahne (45) in Richtung auf den anderen U-Schenkel (37') abgebogen ist.

15. Einrichtung nach Anspruch 14,
**gekennzeichnet durch**
eine gleichsinnige Abbiegung (45,46) mindestens einer in Durchgangsrichtung (7) liegenden Seite beider U-Schenkel (37',38') eines Gegenkontaktes (34',35').

16. Einrichtung nach Anspruch 15,
**dadurch gekennzeichnet,**
**daß** der mit von der Stromschiene (4,5) weggewandten Abbiegungsseiten (46) versehene U-Schenkel (37') in Durchgangsrichtung (7) kürzer ist als der gegenüberliegende U-Schenkel (38').

17. Einrichtung nach einem der Ansprüche 9 bis 13,
**gekennzeichnet durch**
eine konvex gebogene, zwischen den U-Schenkeln (37,38) des Gegenkontaktes (34,35) einliegende und gegen die Innenseite eines U-Schenkels (37,38) zur Erhöhung der Kontaktdruckes wirksame Blattfeder (43).

18. Einrichtung nach einem oder mehreren der vorhergehenden Ansprüche,
**dadurch gekennzeichnet,**
- **daß** in den Steckermodulen (6) parallel zu und insbesondere zwischen den Durchgängen (28,29) für die Stromschienen (4,5) Verbindungsschienen (47) für die Übertragung eines Signalstroms, eines Hilfsstroms oder eines Massepotentials angeordnet sind,
- **daß** die Verbindungsschienen (47) hinsichtlich der Ausrichtung ihrer Querschnittsform im Modulgehäuse (6) entsprechend den Stromschienen (4,5) angeordnet sind und
- **daß** die von den Durchgängen (28,29) für die Potentialleitungen durchsetzten Seitenwände (17,24) von Anschlußgehäuse (1) und Steckmodul (6) mit Steckverbindungskontakten (49) für die Leitung des Signalstroms, des Hilfsstroms, des Massepotentials o.dgl. ausgestattet sind.

## Claims

1. Device, which can be used in particular in telecommunications engineering, for supplying power to parallel-connected electrical loads by means of adjacent potential lines which are in the form of rigid, parallel busbars (4, 5), **characterized by**
- a connection housing (1), which contains the connections (2, 3) for supplying the operating potential and to which plug modules (6) are attached for the purpose of connecting individual loads,
- passages (28, 29), which pass through the plug module housing, and opposing contacts (34, 34', 35, 35') being provided in the plug module (6) for the busbars (4, 5),
- the busbars (4, 5) protruding from one side wall of the connection housing (1), onto which side wall the plug modules (6) are pushed from the free ends and are pushed so as to bear against the connection housing (1) and/or against one another, and the passages (28, 29) and the opposing contacts (34, 35, 34', 35') being designed such that they ensure both that contact is made and that positioning takes place in the form of a frictional connection.

2. Device according to Claim 1, **characterized in that** the busbars (4, 5) have a uniform cross-sectional shape over their entire length, including that which protrudes from the connection housing (1).

3. Device according to Claim 1 or 2, **characterized in that** the busbars (4, 5) have a rectangular cross section and are aligned approximately at right angles to the plugging direction of the plugging openings (10, 11) for the load connections of the plug modules (6).

4. Device according to one or more of the preceding claims, **characterized in that** the busbars (4, 5) are aligned with the longer side, the longer diameter or the longer dimension of their cross section approximately perpendicular to the base of the connection housing (1).

5. Device according to one or more of the preceding claims, **characterized**
- **in that** the housing of a plug module (6) contains a shell-shaped lower part (23) and a lid (9),
- **in that** the partition(s) between the opening edges (32) of the lower part (23) and the lid (9) extend(s) approximately at right angles to the plane of extent of the busbars (4, 5), and
- **in that** the limit edges of the passages (28, 29) which pass through the module housing are delimited by opening edges (32) both of the lower part (23) and of the lid (9).

6. Device according to Claim 5, **characterized in that** the busbars (4, 5) bear, in position, against limit edges and/or limit walls of the passages (28, 29) which pass through the module housing (6).

7. Device according to one or more of the preceding claims, **characterized in that** the busbars (4, 5) are enclosed, in position, in slot-like slots (30, 31) in the lower part (23) which originate from the opening edge of the lower part (23) and are aligned with respect to the base (27) of said lower part (23).

8. Device according to one or more of the preceding claims, **characterized in that** the lid (9) of a module housing (6), in the assembled position, provides the lower part (23) with at least one busbar (4, 5) in its slot enclosure such that it is fixed in position.

9. Device according to one or more of the preceding claims, **characterized in that** opposing contacts (34, 35) which are approximately U-shaped in cross section are enclosed in the passages (28, 29) of the busbars (4, 5) through the lower part (23) of a module housing (6), the busbars (4, 5) resting between the U limbs (37, 38) of said U-shaped opposing contacts (34, 35) in the form of blade contacts.

10. Device according to one or more of the preceding claims, **characterized in that** plugging openings (10, 11) for making plugging contact pass through the lid (9).

11. Device according to Claim 9 or 10, **characterized in that** contact tongues (40, 41), which project in the direction of the lid (9), for a plugging connection (40-42) which passes through the lid (9) are integrally formed on one of the U limbs (37, 38).

12. Device according to one of Claims 9 to 11, **characterized in that** the opposing contacts (34, 35) and the contact tongues (40, 41) are formed from an integral, stamped sheet metal part which is bent so as to give its final shape, in particular a sheet metal part which is made from a resilient material.

13. Device according to one of Claims 9 to 12, **characterized in that** the opposing contacts (34, 35) extend essentially over the entire passage length of the lower part (23) of a module housing (6).

14. Device according to Claim 13, **characterized in that** at least one U limb (38') of the opposing contacts (34', 35') is bent back in the direction of the other U limb (37') on at least one side, which lies in the passage direction (7), for the purpose of forming a contact pressure lug (45).

15. Device according to Claim 14, **characterized by** a portion (45, 46) bent-back (in the same direction) of at least one side, which lies in the passage direction (7), of the two U limbs (37', 38') of an opposing contact (34', 35').

16. Device according to Claim 15, **characterized in that** the U limb (37'), which is provided with bent-back sides (46) facing away from the busbar (4, 5), is shorter in the passage direction (7) than the opposing U limb (38').

17. Device according to one of Claims 9 to 13, **characterized by** a leaf spring (43) which is bent convexly, is enclosed between the U limbs (37, 38) of the opposing contact (34, 35) and acts on the inside of a U limb (37, 38) for the purpose of increasing the contact pressure.

18. Device according to one or more of the preceding claims, **characterized**
- **in that** connection rails (47) for transmitting a signal current, an auxiliary current or an earth potential are arranged in the plug modules (6) parallel to and, in particular, between the passages (28, 29) for the busbars (4, 5),
- **in that** the connection rails (47) are arranged so as to correspond, in terms of the alignment of their cross-sectional shape in the module housing (6), to the busbars (4, 5), and
- **in that** the side walls (17, 24), through which the passages (28, 29) for the potential lines pass, of the connection housing (1) and the plug module (6) are equipped with plugging connection contacts (49) for the line for the signal current, the auxiliary current, the earth potential or the like.

## Revendications

1. Dispositif d'alimentation électrique insérable en particulier dans la technique des télécommunications de consommateurs électriques connectés en parallèle par l'intermédiaire de lignes de potentiel adjacentes, qui sont réalisées sous la forme de rails conducteurs parallèles rigides (4, 5),
**caractérisé par**
- un boîtier de connexion (1) comprenant les connexions (2, 3) en vue de l'alimentation du potentiel d'activité, auquel les modules de connecteur (6) sont fixés en vue de la connexion de consommateurs individuels,
- où des passages traversants (28, 29) ainsi que des contacts antagonistes (34, 34', 35, 35') sont prévus pour les rails conducteurs (4, 5) dans le module de connecteur (6) du boîtier de module de connecteur de celui-ci,
- où les rails conducteurs (4, 5) font saillie depuis la paroi latérale du boîtier de connexion (1), sur laquelle les modules de connecteur (6) sont poussés par les extrémités libres et sont amenés en contact du boîtier de connexion (1) et/ou l'un contre l'autre, et où les passages (28, 29) et les contacts antagonistes (34, 35, 34', 35') sont réalisés de sorte que ceux-ci garantissent non seulement un contact mais également un positionnement sous la forme d'une connexion par friction.

2. Dispositif selon la revendication 1, **caractérisé en ce que** les rails conducteurs (4, 5) présentent une forme en coupe constante sur toute leur longueur faisant saillie du boîtier de connexion (1).

3. Dispositif selon la revendication 1 ou 2, **caractérisé en ce que** les rails conducteurs (4, 5) présentent une coupe transversale rectangulaire et sont orientés sensiblement orthogonalement dans la direction d'enfichage des orifices d'enfichage (10, 11) pour les bornes d'utilisation des modules de connecteur (6).

4. Dispositif selon l'une ou plusieurs des revendications précédentes, **caractérisé en ce que** les rails conducteurs (4, 5) sont orientés sensiblement perpendiculairement au fond du boîtier de connexion (1) avec le côté longitudinal, le plus long diamètre ou la dimension la plus longue de leur coupe transversale.

5. Dispositif selon l'une ou plusieurs des revendications précédentes, **caractérisé en ce que**
- le boîtier d'un module de connecteur (6) comporte une partie inférieure en forme de cuvette (23) et un couvercle (9),
- le joint ou les joints de palier entre les bords (32) des orifices s'étend ou s'étendent depuis la partie inférieure (23) et le couvercle (9) sensiblement rectangulairement dans le plan longitudinal des rails conducteurs (4, 5) et
- les bords de séparation des passages (28, 29) traversant le boîtier de module sont limités par les bords (32) des orifices non seulement de la partie inférieure (23) mais aussi du couvercle (9).

6. Dispositif selon la revendication 5, **caractérisé en ce que** les rails conducteurs (4, 5) viennent en contact positionnés sur les bords de séparation et/ou des parois de séparation des passages (28, 29) traversant le boîtier de module (6).

7. Dispositif selon l'une ou plusieurs des revendications précédentes, **caractérisé en ce que** les rails conducteurs (4, 5) pénètrent positionnés dans des encoches (30, 31) de la partie inférieure (23) sous forme de fentes faisant saillie des bords des orifices de la partie inférieure (23) et orientées vers le fond (27) de celle-ci.

8. Dispositif selon l'une ou plusieurs des revendications précédentes, **caractérisé en ce que** le couvercle (9) d'un boîtier de module (6) alimente fixé dans la position de montage au moins un rail conducteur (4, 5) dans leur encoche dans la partie inférieure (23).

9. Dispositif selon l'une ou plusieurs des revendications précédentes, **caractérisé en ce que**, dans les passages (28, 29) des rails conducteurs (4, 5), des contacts antagonistes (34, 35) sensiblement en forme de U en coupe transversale pénètrent à travers la partie inférieure (23) d'un boîtier de module (6), entre les bras en U desquels (37, 38) reposent les rails conducteurs (4, 5) selon la technique des contacts à lame.

10. Dispositif selon l'une ou plusieurs des revendications précédentes, **caractérisé en ce que** le couvercle (9) est traversé par les orifices de connexion (10, 11) pour les contacts à fiche.

11. Dispositif selon la revendication 9 ou 10, **caractérisé en ce que** des lames de contact (40, 41) s'éloignant d'un des bras en U (37, 38) dans la direction du couvercle (9) sont formées pour un connecteur (40-42) traversant le couvercle (9).

12. Dispositif selon l'une des revendications 9 à 11, **caractérisé en ce que** les contacts antagonistes (34, 35) et les lames de contact (40, 41) sont formés à partir d'une partie de tôle découpée courbée dans sa forme terminale d'un seul tenant, en particulier une en matériau élastique.

13. Dispositif selon l'une des revendications 9 à 12, **caractérisé en ce que** les contacts antagonistes (34, 35) s'étendent sensiblement sur toute la longueur de passage de la partie inférieure (23) d'un boîtier de module (6).

14. Dispositif selon la revendication 13, **caractérisé en ce qu'**au moins un bras en U (38') des contacts antagonistes (34', 35') est courbé sur au moins un côté se trouvant dans la direction de passage (7) en vue de la formation d'une lame de pression de contact (45) dans la direction de l'autre bras en U (37').

15. Dispositif selon la revendication 14, **caractérisé par** une courbure de même sens (45, 46) d'au moins un côté se trouvant dans la direction de passage (7) des deux bras en U (37', 38') d'un contact antagoniste (34', 35').

16. Dispositif selon la revendication 15, **caractérisé en ce que** le bras en U (37') muni de côtés courbés (46) s'éloignant des rails conducteurs (4, 5) dans la direction de passage (7) est plus petit que le bras en U (38') en vis-à-vis.

17. Dispositif selon l'une des revendications 9 à 13, **caractérisé par** un ressort à lame (43) courbé convexe se trouvant entre les bras en U (37, 38) du contact antagoniste (34, 35) et agissant en vue de l'augmentation de la pression de contact contre le côté interne d'un bras en U (37, 38).

18. Dispositif selon l'une ou plusieurs des revendications précédentes, **caractérisé en ce que**
- dans les modules de connecteur (6), des barres de connexion (47) sont disposées parallèles à et en particulier entre les passages (28, 29) pour les rails conducteurs (4, 5) en vue de la transmission d'un courant de signal, d'un courant auxiliaire ou d'un potentiel de masse,
- les barres de connexion (47) sont disposées par rapport à l'orientation de leur forme en coupe dans le boîtier de module (6) de façon correspondante aux rails conducteurs (4, 5), et
- les parois latérales (17, 24) traversées par les passages (28, 29) pour les lignes de potentiel sont munies de contacts de connecteur (49) pour la conduction du courant de signal, du courant auxiliaire, du potentiel de masse ou analogues par le boîtier de connexion (1) et le module de connecteur (6).
